# EUROPÄISCHE PATENTSCHRIFT

(11) **EP 3 834 283 B1**
(45) Veröffentlichungstag und Bekanntmachung des Hinweises auf die Patenterteilung: **18.10.2023**
(21) Anmeldenummer: 19773341.3
(22) Anmeldetag: 07.08.2019
(51) Int. Cl.: H02S 50/15

(54) **OPTOELEKTRONISCHES SOLARZELLEN-TESTSYSTEM FÜR EINE INLINE-SOLARZELLEN- PRODUKTIONSANLAGE UND VERFAHREN ZUM OPTIMIEREN DER INLINE-PRODUKTION VON SOLARZELLEN UNTER EINSATZ EINES SOLCHEN OPTOELEKTRONISCHEN SOLARZELLEN-TESTSYSTEMS**
OPTOELECTRONIC SOLAR CELL TEST SYSTEM FOR AN IN-LINE SOLAR CELL PRODUCTION PLANT, AND METHOD FOR OPTIMISING THE IN-LINE PRODUCTION OF SOLAR CELLS USING AN OPTOELECTRONIC SOLAR CELL TEST SYSTEM OF THIS TYPE
SYSTÈME OPTOÉLECTRONIQUE DE TEST DE CELLULES SOLAIRES POUR UNE INSTALLATION DE PRODUCTION EN LIGNE DE CELLULES SOLAIRES ET PROCÉDÉ D'OPTIMISATION DE LA PRODUCTION EN LIGNE DE CELLULES SOLAIRES AVEC MISE EN OEUVRE D'UN TEL SYSTÈME OPTOÉLECTRONIQUE DE TEST DE CELLULES SOLAIRES

(30) Priorität: 07.08.2018 DE 102018119171
(43) Veröffentlichungstag der Anmeldung: 16.06.2021
(73) Patentinhaber: Wavelabs Solar Metrology Systems GmbH, 04179 Leipzig (DE)
(72) Erfinder: SCHERFF, Maximilian, 04179 Leipzig (DE)
(74) Vertreter: adares Patent- und Rechtsanwälte Reininger & Partner GmbB
(86) Internationale Anmeldenummer: PCT/DE2019/100718
(87) Internationale Veröffentlichungsnummer: WO 2020/030232

(56) Entgegenhaltungen:
- US-A1- 2012 130 520
- US-B1- 9 645 180

## Beschreibung

Die Erfindung betrifft ein optoelektronisches Solarzellen-Testsystem für eine inline-Solarzellen-Produktionsanlage gemäß dem Oberbegriff des Anspruchs 1. Weiterhin betrifft die Erfindung ein Verfahren zum Optimieren der inline-Produktion von Solarzellen unter Einsatz eines solchen optoelektronischen Solarzellen-Testsystems.

Optoelektronische Solarzellen-Testsysteme weisen ein im Fachjargon als "Flasher" bezeichnetes System mit einer Belichtungs- und Messeinrichtung auf. Diese Belichtungs- und Messeinrichtung ist mit einer Steuer- und Auswerteeinheit gekoppelt und steht üblicherweise am Ende der inline-Produktionsanlage zur Qualitäts-Vermessung der produzierten Solarzellen. Ein solches System ist beispielsweise aus der DE112012006365T5 bekannt.

Die Belichtungs- und Messeinrichtung ist ausgebildet und eingerichtet, an einer Solarzelle eine oder mehrere Test-Messungen zum Generieren von Testmessungs-Daten durchzuführen, wobei die Test-Messungen ausgewählt sind aus der Gruppe umfassend:
- Infrarotaufnahme-Messung einer in Sperrrichtung bestromten Solarzelle zur Ermittlung lokaler Kurzschlüsse in der Solarzelle,
- Blitzbelichtung mit einem Belichtungsspektrum, insbesondere einem simulierten Sonnenspektrum, zur Messung mindestens einer Strom-Spannung-Kennlinie der Solarzelle ,
- eine Mehrzahl spektral differenzierter Blitzbelichtungen zur Messung spektral aufgelöster Strom- Kennlinien der Solarzelle und/oder zur Messung einer quasi-externen Quanten-Effizienz der Solarzelle,
- Elektro-Lumineszenz-Messung der Solarzelle insbesondere zur Ermittlung von Mikrorissen im Solarzellenmaterial und/oder zur Ermittlung von Elektrodenstruktur-Unterbrechungen und/oder von Kontaktproblemen zwischen

Elektrodenstrukturen und Substrat und/oder zur Ermittlung elektrisch inaktiver Bereiche und/oder lokaler Kurzschlüsse,
- Messung der Hellkennlinie und Messung der Dunkelkennlinie der Solarzelle zur Errechnung des Serienwiderstands der Solarzelle und
- Widerstandsmessung der Elektrodenstrukturen der Solarzelle aufweisend Elektrodenfinger zur Ermittlung der Qualität der metallischen Elektrodenstrukturen.

Durch die spektral differenzierten Blitzbelichtungen ergibt sich eine quasi-externe Quanten-Effizienz der Solarzelle. Bei einer Blitzbelichtung im blauen Spektralbereich deuten Insuffizienzen im Messergebnis einer Wafer-Solarzelle auf Probleme mit der Nitridschicht oder dem Emitter hin. Bei einer Blitzbelichtung im roten Spektralbereich können schlechtes bulk-Material des Wafers oder eine schlechte Qualität der Rückseitenpassivierungsschicht erkannt werden.

Die durch die Elektro-Lumineszenz-Messung erkannten Unterbrechungen und/oder Kontaktprobleme zwischen Elektrodenstrukturen und Substrat können je nach strukturellem Design der Solarzelle sowohl auf ihrer Vorder- als auch auf der Rückseite auftreten. Elektrisch inaktive Bereiche werden bei Wafer-Solarzellen durch geschädigtes oder qualitativ schlechtes Substratmaterial verursacht. Lokale Kurzschlüsse des p-n-Übergangs können bei Wafer-Solarzellen dadurch entstehen, dass der pn-Übergang z.B. durch einen so genannten Ätzumgriff am Rand der Solarzelle kurzgeschlossen wird.

Entlang einer Solarzellen-inline-Produktionsanlage aufgebaut aus einer Vielzahl verketteter Prozesseinrichtungen befinden sich üblicherweise unterschiedliche Prozess-Messeinrichtungen, die den Produktionsbetrieb überwachen bzw. dokumentieren. Hierzu zählen bei der Herstellung Wafer-basierter Solarzellen insbesondere Prozess-Messeinrichtungen zur Erfassung von Waferresistivity, Waferdicke, Wafergewicht, Wafer-TTV (Total Thickness Variation), nasschemischer Ätzabtrag, Zusammensetzung der Nasschemie, Minoritätsladungsträger-Lebensdauer der Wafer, Leitfähigkeit und Homogenität von Diffusionsschichten, Schichtdicken und Brechungsindex von Antireflex- und/oder Passivier-schichten, Homogenität von Antireflex- und/oder Passivier-schichten, Ätzumgriff bei einseitigen Ätzschritten. Auftragsmenge und Position von Metallisierungspasten, Fehler im Druckbild der Pasten und viele mehr, je nach Automatisierungsgrad und Auslegung der Produktionslinie. Diese Prozess-Messeinrichtungen ermitteln anhand von Produktions-Messungen Produktionsmessungs-Daten und speichern diese üblicherweise. Gegebenenfalls lösen sie bei zu großen Abweichungen der Produktionsmessungs-Daten von definierten Sollwerten Alarme aus. Anhand weiterer Produktions-Messungen werden Produktionsmessungs-Daten generiert, die Parameter des jeweils in der Prozesseinrichtung ablaufenden Bearbeitungsverfahrens darstellen. Dies sind insbesondere Daten betreffend zeitliche und/oder räumliche Verläufe von Temperatur, Druck, Bearbeitungszeit etc. Produktionsmessungs-Daten entstehen in Prozesseinrichtungen entweder durch Produktionsmessungen an der teilgefertigten Solarzelle oder durch Produktionsmessungen von Parametern des in der Prozesseinrichtung ablaufenden Bearbeitungsverfahrens.

Neben weiteren Tätigkeiten können und sollen Mitarbeiter der inline-Solarzellen-Produktionsanlage diese aus Produktionsmessungs-Daten gewonnenen Kennwerte beobachten, wenn sie dazu Zeit finden, und entsprechend ihrer Kenntnisse und Befugnisse bei Bedarf Korrekturen am jeweiligen Bearbeitungsverfahren der Prozesseinrichtung vornehmen oder Auffälligkeiten an einen anderen Mitarbeiter zur weiteren Veranlassung melden. Meistens, auch bei größeren Problemen, läuft die inline-Produktion unvermindert weiter, bis das zuständige Fachpersonal eingetroffen ist, und mit der Fehlersuche beginnt. Bis zum Eintreffen des Fachpersonals können durchaus Stunden vergehen. Schlimmer noch ist, wenn die Probleme dem an den Prozesseinrichtungen der inline-Produktionsanlage im Einsatz befindlichen Produktionspersonal nicht auffallen oder diese nicht weiter gegeben werden. Dies mag an einer schlechten Schulung liegen oder das Personal hat aus unterschiedlichen Gründen keine Motivation, die erkannten Probleme zu melden. Ebenso können für das Produktionspersonal zu viele parallele Aufgaben vorliegen, so dass die Anlagen der Prozesseinrichtungen mit den subjektiv wahrgenommenen größten Problemen priorisiert werden. Bei solchen Szenarien gelangen weitere ebenfalls sehr relevante Probleme dem besser geschulten Fachpersonal beispielsweise erst beim nächsten Schichtwechsel-Reporting zur Kenntnis. Da die inline-Solarzellenproduktion üblicherweise rund um die Uhr läuft, wird das Beheben vieler Probleme, die während der Nacht schon auftraten, oftmals erst morgens nach dem Eintreffen höher qualifizierten Fachpersonals angegangen.

Das an den Prozesseinrichtungen der inline-Produktionsanlage im Einsatz befindliche Produktionspersonal hat üblicherweise ein vergleichsweise geringes Ausbildungsniveau und daher auch kein komplexes Prozess- und/oder Solarzellen-Verständnis. Außerdem tritt an vielen Standorten eine hohe Fluktuation dieses Produktionspersonals von bis zu 50% im Jahr auf. Dementsprechend kann sich Produktions-Knowhow nicht in nachhaltiger Weise aufbauen und gehalten werden. Dies steht im Spannungsverhältnis zu der Tatsache, dass die Solarzellenherstellung ein hochkomplexer multidisziplinärer Prozess mit mannigfaltigen Einflüssen auf die vielen unterschiedlichen Solarzellenparameter ist. Diese Solarzellenparameter können sich gegenseitig beeinflussen und dadurch gewisse Effekte verstärken oder auch kompensieren, was die Fehlersuche zur Optimierung der Produktion zusätzlich erschwert. Dadurch werden die wirklichen Ursachen für Prozessabweichungen für das Produktionspersonal oft schwer auffindbar. Außerdem werden insbesondere die Wafer-Solarzellen-Strukturen immer komplexer (PERC (Passivated Emitter and Rear Cell), IBC (Interdigitated Back Contact), HIT (Heterojunction with Intrinsic Thin layer)) und reagieren folglich noch sensibler auf Prozessabweichungen, was den Wirkungsgrad beeinflusst sowie die Anfälligkeit auf PID (Photo-Induced Degradation) oder LeTID (Light and elevated Temperature Induced Degradation).

Läuft die inline-Produktionsanlage nicht optimal, erfahren die Solarzellen Qualitäts- und/oder Wirkungsgradeinbußen. Damit die Wirkungsgrade besonders hoch sind, müssen alle Prozesseinrichtungen und Prozesse optimal eingestellt sein, was nur mit viel Messtechnik und viel und gut geschultem Personal möglich ist. Beides ist teuer. Interpretationsfehler der vielen Messergebnisse, die für eine Zelle auch noch zeitversetzt eintreffen, sind wahrscheinlich und auch üblich. Vermutlich läuft derzeit keine inline-Produktionsanlage der Welt über einen längeren Zeitraum wirklich optimal.

Entlang und am Ende des Herstellungsprozesses von Solarzellen werden ihre Zellparameter/Charakteristika gemessen und dokumentiert. Dies geschieht vor allem am so genannten Flasher, aber auch an Prozess-Messeinrichtungen die beispielsweise zweidimensionale Elektrolumineszenz-oder Photolumineszenz- oder Infrarot-Aufnahmen der teilgefertigten Solarzellenoberfläche ermitteln. Auch ist es möglich, dass diese Prozess-Messeinrichtungen Trends darstellen, um mögliche Ursachen von Qualitätsproblemen leichter auffindbar zu machen. Häufig fehlt dem Produktionspersonal aber das Knowhow und/oder die Zeit und/oder die Kenntnis aktueller Produktionsmodifikationen (andere Materialcharge der Substrat-Elemente (z.B. Wafer), Nassbank für die Texturätzung wurde neu befüllt etc.), um die Abweichungen der Ergebnisse richtig zu deuten. Es muss das Fachpersonal angefordert werden, was zu Zeitverlust führt und dadurch eine geringere Qualität (Wirkungsgrad) oder reduzierte Produktionsmenge (bei Produktionsstopp) verursacht.

Das Fachpersonal muss interdisziplinär geschult sein oder aus mehreren Personen bestehen die alle in diesem Moment relevanten technischen Problembereiche des gesamten Produktionsprozesses abdecken. Je nach tatsächlichem Kenntnisstand wird das aufgetretene Problem nicht optimal gelöst, oder je nach dem wer das Problem zu lösen versucht, werden unterschiedliche Lösungswege eingeschlagen. Bis die wirkliche Ursache gefunden ist, läuft die Linie nicht optimal.

Insbesondere wenn das Fachpersonal nicht unmittelbar zur Verfügung steht wird der vom Performanceeinbruch beeinträchtigte Solarzellen-Produktionsumfang signifikant. Häufig ist nur wenig Fachpersonal vorhanden oder dieses muss gleichzeitig mehrere Probleme beheben. Dieses Problem verstärkt sich, wenn mehrere parallel betriebene Teillinien gleichzeitig Probleme machen. Dann laufen mehrere Teillinien nicht optimal.

Um Produktionskosten zu sparen, sollen weiterhin Wartungsintervalle so groß wie möglich gewählt werden. Daraus folgt, dass gewartet wird, bis ein nicht mehr hinzunehmender Performanceeinbruch eintritt, oder einzelne Prozesseinrichtungen und damit die gesamte inline-Produktionsanlage in Störung gehen. Im Fall der Störung ist die Ursache eindeutig. Bei einem Performanceeinbruch muss dieser erst einmal den verursachenden Prozesseinrichtungen zugeordnet werden. Der Performanceeinbruch kann viel eher als üblich eintreten oder er könnte viele unterschiedliche oder eine Kombination von Ursachen haben. Dann fällt die Zuordnung schwer. Während der Suche nach der Ursache läuft die inline-Produktionsanlage nicht optimal.

Es kann auch sein, dass die inline-Produktionsanlage eigentlich perfekt eingestellt ist, aber ein Performanceeinbruch z.B. durch Einsatz eines preislich günstigeren Ausgangsmaterials mit minderer Qualität oder eine Umstellung der Prozessparameter gewissermaßen bewusst herbeigeführt wurde, dies aber dem Produktionspersonal, beispielsweise aufgrund unzureichender Kommunikation, nicht bekannt ist. In einem solchen Fall kann es sein, dass ein beobachteter Performanceeinbruch fehlgedeutet wird und das Produktionspersonal falsche Schlüsse zieht und innerhalb oder auch außerhalb seines Handlungsspielraumes Prozessparameter anpasst. Dies würde die Performance weiter verschlechtern. Diese weitere Verschlechterung wird aber, abhängig vom Ort des Eingriffs, erst mit einer erheblichen zeitlichen Verzögerung (ein inline-Produktionsdurchlauf kann mehrere Stunden dauern) beobachtet werden, wenn die fertig produzierte Solarzelle am Flasher der Zelltesteinrichtung vermessen wird. Dies hat einen erheblichen Anteil an schlechteren Solarzellen zur Folge, die nicht mehr optimal prozessiert wurden.

Eine inline-Solarzellen-Produktionsanlage ist üblicherweise wie folgt organisiert: Für die Betreuung der inline-Produktionsanlage sind in der Regel folgende Personengruppen im Einsatz:
- das Produktionspersonal, das im Schichtbetrieb die rund um die Uhr laufenden Prozesseinrichtungen bedient und dabei kleine Prozessstörungen sofort behebt (beispielsweise Waferbruch beseitigt) und Instandhaltung in Form von Wartungsarbeiten durchführt aber auch bei größeren Störungen der Prozesseinrichtungen diese Störungen bis hin zum Ausfall der Prozesseinrichtung behebt,
- das Schichtleitungspersonal, das die Aufträge der Prozesseinrichtungen betreut und dazu das Produktionspersonal auch für die Instandhaltung organisiert,
- das Fachpersonal, das Expertenwissen für die einzelnen Prozessschritte besitzt, jedoch nicht permanent vor Ort ist (beispielsweise während der Spät- oder Nachtschicht), aus vergleichsweise wenig Personen besteht und bei Störungen der Prozesseinrichtungen mit Fachwissen unterstützt und
- das Produktionsleitungspersonal, das den Gesamtüberblick und die Verantwortung über die Produktion hat.

Die aus dem Stand der Technik bekannten Systeme zum Testen von produzierten Solarzellen weisen somit das Problem auf, dass Defizite in den Bearbeitungsverfahren der einzelnen Prozesseinrichtungen gar nicht, nur unzureichend oder unzutreffend und zusätzlich noch zeitverzögert erkannt werden.

Der vorliegenden Erfindung liegt daher die Aufgabe zu Grunde ein optoelektronisches Solarzellen-Testsystem für eine inline-Solarzellen-Produktionsanlage bereit zu stellen, das eine zuverlässigere, zeitnähere Defiziterkennung in den einzelnen Prozessen der inline-Produktionsanlage ermöglicht und dadurch eingeleitete Gegenmaßnahmen schneller und zuverlässiger zum Abstellen der Prozess-Defizite führen.

Aus der US 9,645,180 B1 sind ein Simulations-System und -verfahren bekannt, mit denen eine Stromerzeugung von Solarflotten vorhersagbar ist. Dabei wird u.a. eine Bestrahlung von Solarmodulen unter Verwendung ihrer Stromausgaben gemessen und daraus Daten zur Vorhersage erzeugt.

Diese Aufgabe wird gelöst durch ein optoelektronisches Solarzellen-Testsystem mit den Merkmalen des Anspruchs 1 und durch ein Verfahren zum Optimieren der inline-Produktion von Solarzellen unter Einsatz eines solchen optoelektronischen Solarzellen-Testsystems mit den Merkmalen des Anspruchs 10.

Erfindungsgemäß ist vorgesehen, dass die Steuer- und Auswerteeinheit (20) eingerichtet und ausgebildet ist,
mit Testmessungs-Daten gleicher Test-Messungen, vorgenommen mittels der Belichtungs- und Messeinrichtung an einer Vielzahl inline produzierter Solarzellen, statistische Analysen durchzuführen und
   - die statistischen Analysen der Testmessungs-Daten unterschiedlicher Test-Messungen miteinander zu korrelieren und/oder
   - die statistischen Analysen von Test-Messungs-Daten mit statistischen Analysen von Produktionsmessungs-Daten zu korrelieren und/oder
   - die statistischen Analysen von Test-Messungs-Daten und/oder die statistischen Analysen von Produktionsmessungs-Daten mit Produktions-Eingangsdaten zu korrelieren,
um Korrelationsergebnisse zu generieren und aus den Korrelationsergebnissen anhand von Ableitungsregeln mindestens einen Handlungsvorschlag und/oder mindestens eine Handlungsanweisung abzuleiten, die mindestens einer mit der inline-Produktion der Solarzellen befassten Personengruppe zugeordnet sind, wobei die Steuer- und Auswerteeinheit eine Kommunikationseinrichtung aufweist, die den mindestens einen Handlungsvorschlag und/oder die mindestens eine Handlungsanweisung an die mindestens eine zugeordnete Personengruppe übermittelt. Auch Warnungen und Hinweise sind je nach ihrer inhaltlichen Formulierung als Handlungsvorschläge oder Handlungsanweisungen anzusehen. Ein Warnhinweis beispielsweise impliziert den Vorschlag oder die Anweisung zur erhöhten Achtsamkeit, die durch den Inhalt des Warnhinweises näher umrissen ist.

Zur klaren Differenzierung von Testmessungen, die mittels der Belichtungs- und Messeinrichtung des Flashers an der fertig produzierten Solarzelle durchgeführt werden, sind Produktionsmessungen und die daraus entstehenden Produktionsmessungs-Daten solche Messdaten, die aus teilgefertigten Solarzellen nach oder während einzelner Prozessschritte in den Prozesseinrichtungen der inline-Produktionsanlage gewonnen werden. Eine inline-Produktionsanlage für Solarzellen ist aufgebaut aus einer Reihe dieser Prozesseinrichtungen. Jede dieser Prozesseinrichtungen kann eine oder mehrere Prozess-Messeinrichtungen aufweisen. Mittels dieser Prozess-Messeinrichtungen werden Prozess-Messungen an den noch nicht fertig gestellten und somit erst teilgefertigten Solarzellen durchgeführt und auf diesem Wege Produktionsmessungs-Daten gewonnen. Kumulativ oder alternativ können die Prozess-Messeinrichtungen auch ausgebildet sein, Produktionsmessungs-Daten zu gewinnen, die nicht durch Messungen an den teilgefertigten Solarzellen sondern durch Messungen an dem in der jeweiligen Prozesseinrichtung ablaufenden Bearbeitungsverfahren gewonnen werden. Damit sind Prozessparameter der jeweiligen Bearbeitungsverfahren gemeint, denen die teilgefertigten Solarzellen an der jeweiligen Prozesseinrichtung unterworfen sind.

In der Terminologie dieser Patentanmeldung sind daher die an fertig produzierten Solarzellen durchgeführten Test-Messungen zur Erzeugung von Testmessungs-Daten von den an teilgefertigten Solarzellen oder am jeweiligen Bearbeitungsverfahren des Teilfertigungsschritts durchgeführten Produktions-Messungen zur Erzeugung von Produktionsmessungs-Daten zu differenzieren. Außerdem wird noch der Begriff der Produktions-Eingangsdaten verwendet. Produktions-Eingangsdaten sind z. B. Materialparameter der in den inline-Produktionsprozess eingangs hinein gegebenen Substrat-Elemente in Form von Halbleiter-Wafern. Aus den Substrat-Elementen werden im inline-Produktionsprozess durch die Verkettung der Prozesseinrichtungen teilgefertigte und schließlich fertig produzierte Solarzellen hergestellt.. Weiterhin können Produktions-Eingangsdaten die Material-Eigenschaften von Verbrauchsmaterialien sein, die in den jeweiligen Prozesseinrichtungen entlang der inline-Produktionskette für die in den Prozesseinrichtungen ablaufenden Bearbeitungsverfahren zum Einsatz kommen. Das sind beispielsweise Flüssigkeiten zum Reinigen oder Entfernen von Oberflächen, Gase zum Abscheiden von dünnen Schichten oder Metall-Pasten zur Erstellung von Metallisierungen.

Mit Hilfe dieses optoelektronischen Solarzellen-Testsystems werden nicht nur wie üblich die Testmessungs-Daten, Produktionsmessungs-Daten und Produktions-Eingangsdaten erfasst, dargestellt und dokumentiert, sondern das Solarzellen-Testsystem erarbeitet eigenständig gezielte Mitteilungen, die als Handlungsvorschläge oder als Handlungsanweisungen ausgestaltet sind. Diese Handlungsvorschläge oder Handlungsanweisungen werden, abhängig vom jeweiligen Inhalt an eine zugeordnete Personengruppe kommuniziert. Die zugehörige Personengruppe ist eine oder mehrere der folgenden Personengruppen: Produktionspersonal, Schichtleitungspersonal, Fachpersonal und Produktionsleitungspersonal.

Die Handlungsvorschläge oder Handlungsanweisungen können Aufträge beinhalten, die unmittelbar oder nach Überprüfung weiterer Parameter durch die zugehörige Personengruppe selbst durchgeführt oder veranlasst werden. Die Zuordnung der Handlungsvorschläge und/oder der Handlungsanweisungen an die zugeordnete Personengruppe richtet sich nach einer für die jeweilige inline-Produktionsanlage spezifischen Informations- und Zuständigkeits-Hierarchie. Die Kommunikation erfolgt an verschiedene zugeordnete Personengruppen über eine situationsangepasste Auswahl des Kommunikations-Mediums und des Kommunikations-Zeitpunktes.

Das Testsystem ermöglicht eine vollständige oder teilautomatisierte Analyse vieler Kennwerte in Form von Gesamtdaten aufweisend Testmessungs-Daten, Produktionsmessungs-Daten und Produktions-Eingangsdaten. Diese ProduktionsDaten werden zwar nicht aus der inline-Produktionsanlage gewonnen, sind dennoch für die produzierten Solarzellen relevant. Dies sind insbesondere Kennwerte der in der inline-Produktionsanlage bearbeiteten Ausgangsstoffe und die zum Einsatz kommenden Verbrauchsmaterialien.

Jeder mittels des Solarzellen-Testsystems ermittelte Performanceeinbruch der produzierten Solarzellen hat in der Perspektive der analysierten Gesamtdaten im Gesamtdaten-Raum einen klaren "Fingerabdruck". Die Herausbildung des jeweilig spezifischen "Fingerabdrucks" und auch die Überlagerung mehrerer solcher "Fingerabdrücke" im Gesamtdaten-Raum werden durch Auswertung der Gesamtdaten detektiert. Als Teil der Auswertung werden bevorzugt die statistischen Analysen von Test-Messdaten und Produktions-Messdaten und die Produktions-Eingangsdaten korreliert. Es ist insbesondere von Vorteil, die statistischen Analysen der Daten einer oder mehrerer bildgebender Test- und/oder Produktions-Messverfahren mit nicht-bildgebenden Test- und/oder Produktions-Messverfahren zu korrelieren.

Das Auffallen der Produktionsabweichung und einem darauf resultierenden Performance-Einbruch hängt mit diesem Testsystem nicht mehr davon ab wann der Produktionsmitarbeiter einmal wieder auf Ergebnisse der Test-Messungen und/oder Produktions-Messungen schaut und die auffälligen Daten tatsächlich bemerkt und dann auch noch richtig deutet. Weitere Verzögerungsquellen bestehen im menschlichen Faktor, wo und wann das Fachpersonal gerade seine Runde macht oder wann im Verhältnis zum Performance-Einbruch das nächste routinemäßige Reporting des Produktionspersonals beim Fachpersonal ansteht. Das Testsystem weist auf eine beobachtete Abweichung unmittelbar hin und schlägt über die generierten Mitteilungen Aktionen vor oder weist diese an. Das heißt, das Testsystem gibt dem Linienpersonal direkte Hinweise, fordert es bei Bedarf zu bestimmten Kontrollen oder Messungen auf und/oder übernimmt bis zum routinemäßigen oder angeforderten Eintreffen des Fachpersonals übergangsweise die Führung des Produktionspersonals. Durch eine einen Alarm aufweisenden Mitteilung, die auch dokumentiert wird, kann sich ein zum Produktionspersonal gehörender Mitarbeiter schlecht herausreden, dass er nichts bemerkt hätte oder nicht auf den Gedanken gekommen sei diese oder jene Maßnahme zu ergreifen, weil der Fehler beispielsweise so selten auftritt. Mittels der vom Testsystem generierten Mitteilungen wird ein dem Performance-Defizit entgegen steuerndes zeitnahes Handeln eingeleitet, was durch das Vermeiden längerer Stillstandzeiten zu einer signifikanten Einsparung von Produktionskosten führt.

Weiterhin sind neu hinzukommende Ableitungsregeln direkt einsatzbereit und müssen nicht erst beim Linienpersonal durch Schulung erläutert werden.

Bevorzugt ist das optoelektronische Solarzellen-Testsystem dadurch gekennzeichnet, dass die Kommunikationseinrichtung derart eingerichtet und ausgebildet ist, dass
- eine an der Belichtungs- und Messeinrichtung angeordnete Displayvorrichtung und/oder
- eine an der Steuer- und Auswerteeinheit angeordnete Displayvorrichtung und/oder
- eine an einer Prozesseinrichtung der inline-Solarzellen-Produktionsanlage angeordnete Displayvorrichtung und/oder
- ein mobiles digitales Endgerät
den mindestens einen Handlungsvorschlag und/oder die mindestens eine Handlungsanweisung an die mindestens eine zugeordnete Personengruppe kommuniziert. Die Auswahl des für die Kommunikation des Handlungsvorschlags und der Handlungsanweisung verwendeten Mediums erfolgt dabei situationsabhängig. Wenn mehrere Personengruppen zugeordnet werden, kann die Kommunikation mit gleichen oder unterschiedlichen Kommunikations-Medien erfolgen.

Das optoelektronisches Solarzellen-Testsystem ist mit Vorteil so weitergebildet, dass die Kommunikationseinrichtung derart ausgebildet und eingerichtet ist, dass die Kommunikationseinrichtung abhängig von dem mindestens einen abgeleiteten Handlungsvorschlag und/oder der mindestens einen abgeleiteten Handlungsanweisung die mindestens eine spezifisch zugeordnete Personengruppe auswählt.

Die Handlungsvorschläge und Handlungsanweisungen können auf sehr unterschiedliche Weisen kommuniziert werden. Sie können beispielsweise automatisch an das jeweils im Einsatz befindliche Produktionspersonal gegeben werden. Die Hinweise in Form der Handlungsvorschläge und Handlungsanweisungen lassen sich durch spezifische Meldeleuchten, spezifische Alarmtöne, Displayanzeigen in Textform oder als Kombinationen davon übermitteln. Je nach Art und Schwere der Prozess-Defizite können die Mitteilungen an einen größeren Personenkreis zugeordneter Personengruppen erfolgen. Hierbei können das Kommunikationsmedium sowie der Inhalt der Mitteilung variieren. Beispielsweise wird eine kleine Prozessabweichung nur am Display als "zur Kenntnisname" angezeigt und hat keine Weisungsfunktion auf das an dieser Prozesseinrichtung verantwortliche Produktionspersonal. Starke Prozess-Defizite lassen sich beispielsweise über einen speziellen Alarmton melden, müssen an einer entsprechend ausgebildeten Schnittstelle quittiert werden und fordern in Form einer Handlungsanweisung das Produktionspersonal zu vorgegebenen Maßnahmen auf. Hierüber gibt es eine Meldung an das Schichtleitungspersonal. In sehr schweren Fällen könnte es bis zur Aufforderung zum Produktionsstopp führen der vom Produktionsleitungspersonal nur bestätigt werden muss. Dies kann auch online von Ferne her geschehen.

In schweren Fällen kann das System dem Produktionspersonal weisungsbefugt sein, üblicherweise gibt es Handlungsvorschläge. Je nach Schwere müssen diese quittiert und somit bestätigt werden. Passiert dies nicht, so erfolgt die Mitteilung an eine alternative zugeordnete Personengruppe auf die gleiche oder eine andere Weise. Abhängig von der Relevanz einer Mitteilung kann auch das Fachpersonal und/oder ein hierarchisch übergeordneter Personenkreis direkt benachrichtigt werden, wozu sich digitale Endgeräte und eine Kommunikation via Text-/Sprachmitteilungen anbietet. Die Relevanz kann beispielsweise mit der Überschreitung eines Schwellwertes korrelieren oder auch dadurch hervorgerufen werden, dass eine Meldung an das Produktionspersonal nicht quittiert wurde. Die Art und Weise der Mitteilung kann mit zunehmender Dauer des Prozess-Defizits in eine höhere Relevanzstufe, beispielsweise durch den Wechsel eines Handlungsvorschlags in eine Handlungsanweisung eskalieren.

Mit Vorteil ist das optoelektronische Solarzellen-Testsystem, dadurch gekennzeichnet, dass die Steuer- und Auswerteinheit derart eingerichtet und ausgebildet ist,
- die statistischen Analysen der Produktionsmessungs-Daten mittels empfangener Produktions-Messwerte von Produktions-Messeinrichtungen durchzuführen und/oder
- von Produktions-Messeinrichtungen die in den Produktions-Messeinrichtungen generierten statistischen Analysen der Produktionsmessungs-Daten zu empfangen. Die genannten statistischen Analysen umfassen übliche Mittelwert- und Streuwertanalysen. Diese können für die ständig vorgenommenen Test-Messungen und Produktionsmessungen entweder zentral durch die Steuer- und Auswerteeinheit durchgeführt werden oder diese Auswertungen werden bereits durch entsprechend ausgebildeten Produktions-Messeinrichtungen übernommen, die anschließend die statistischen Auswertungsergebnisse an die Steuer-und Auswerteeinheit übertragen.

Bevorzugt sind die Ableitungsregeln in einem digitalen Speicher der Steuer-und Auswerteeinheit abgelegt. Die einsetzbaren Ableitungsregeln hängen von den zur Verfügung stehenden Test-Messungen und Produktions-Messungen ab. Seitens des Fachpersonals werden die aktivierbaren Ableitungsregeln ausgewählt.

Besonders bevorzugt sind die Ableitungsregeln in dem digitalen Speicher der Steuer- und Auswerteeinheit über eine digitale Schnittstelle veränderbar abgelegt. Diese Weiterbildung hat den Vorteil, dass sich neue, ergänzende Ableitungsregeln und sich daraus ergebende Mitteilungen in Form von Handlungsvorschlägen und/oder Handlungsanweisungen vom Fachpersonal einprogrammieren lassen. Ebenso kann das Fachpersonal durch empirische Beobachtung des Systems mit seinen Gesamtdaten in unterschiedlichen Korrelations-Szenarien selbst weitere Ableitungsregeln und sich daraus ergebende Mitteilungen ermitteln.

In einer vorteilhaften Weiterbildung des optoelektronischen Solarzellen-Testsystems ist vorgesehen, dass die Displayvorrichtung der Belichtungs- und Messeinrichtung und/oder die Displayvorrichtung der Steuer- und Auswerteeinheit und/oder die Displayvorrichtungen der Prozesseinrichtungen und/oder die mobilen digitalen Endgeräte zur Aufnahme eines Empfangsquittungssignals generiert von der mindestens einen spezifisch zugeordneten Personengruppe ausgebildet und eingerichtet sind. Diese Empfangsquittungssignale werden bei der Kommunikation von Mitteilungen in Form von Handlungsvorschlägen und/oder Handlungsanweisungen angefordert. Bleiben angeforderte Empfangsquittungssignale aus, so wiederholt sich die Anforderung. Je nach Relevanzgrad der Mitteilung kann beim weiteren Ausbleiben des Empfangsquittungssignals eine weitere Personengruppe zugeordnet und informiert werden.

Bevorzugt ist das optoelektronische Solarzellen-Testsystem dadurch gekennzeichnet, dass die Displayvorrichtung der Belichtungs- und Messeinrichtung und/oder die Displayvorrichtung der Steuer- und Auswerteeinheit und/oder die Displayvorrichtung der Prozesseinrichtung und/oder mindestens eines der mobilen digitalen Endgeräte zur Aufnahme eines Auswertungssignals ausgebildet und eingerichtet ist, wobei das Auswertungssignal seitens der mindestens einen zugeordneten Personengruppe kommuniziert, ob der von der Steuer- und Auswerteeinheit generierte Handlungsvorschlag und/oder die von der Steuer- und Auswerteeinheit generierte Handlungsanweisung aus Sicht der zugeordneten Personengruppe zutreffend gewesen ist. Diese Auswertungssignale werden bevorzugt seitens des Fachpersonals ausgewertet und dienen anschließend dazu die zum Einsatz gekommenen Ableitungsregeln zu verifizieren und bei Bedarf zu adaptieren oder gar zu verwerfen.

Alternativ ist es ebenso möglich, die nach Korrelation der statistischen Analysen der Daten und dem Anwenden der Ableitungsregeln generierten Mitteilungen in Form von Handlungsvorschlägen und/oder Handlungsanweisungen einfach zu speichern. Im Nachhinein kann die Richtigkeit der Mitteilungen vom Fachpersonal überprüft und bestätigt oder widerrufen werden. Unter Zuhilfenahme dieses Feedbacks werden daraufhin die Ableitungsregeln manuell adaptiert und somit optimiert.

In einer bevorzugten Weiterbildung des vorangehend beschriebenen optoelektronischen Solarzellen-Testsystems mit Auswertungssignalen ist die Steuer- und Auswerteeinheit eingerichtet und ausgebildet, eine statistische Analyse zwischen den generierten Handlungsvorschlägen und Handlungsanweisungen und den in Reaktion darauf erhaltenen Auswertungssignalen durchzuführen und abhängig von diesen statistischen Analysen die zum Einsatz gekommenen Ableitungsregeln zu verifizieren und zu adaptieren. Bei dieser Variante ist die vorangehend beschriebene Auswertungsarbeit des Fachpersonals zum großen Teil oder ganz automatisiert, um ein selbständig lernfähiges System zu schaffen. Dazu können auch Systeme mit künstlicher Intelligenz beispielsweise unter Einsatz neuronaler Netze verwendet und angelernt werden.

Die der Erfindung zu Grunde liegende Aufgabe wird auch gelöst durch ein Verfahren zum Optimieren der Produktion von Solarzellen mittels einer inline-Solarzellen-Produktionsanlage unter Einsatz eines der vorangehend beschriebenen optoelektronischen Solarzellen-Testsysteme. Die inline-Solarzellen-Produktionsanlage ist, wie bereits vorangehend dargestellt, aus einer Mehrzahl von Prozesseinrichtungen mit Prozess-Messeinrichtungen zum Durchführen von Produktions-Messungen aufgebaut, um dadurch Produktionsmessungs-Daten zu generieren.

Bevorzugt ist das Verfahren zum Optimieren der inline-Produktion von Solarzellen derart weitergebildet, dass
- die statistischen Analysen der Testmessungs-Daten unterschiedlicher Test-Messungen miteinander korrelieren werden und/oder
- die statistischen Analysen der Testmessungs-Daten von Test-Messungen mit statistischen Analysen von Produktionsmessungs-Daten korreliert werden und/oder
- die statistischen Analysen von Test-Messungs-Daten mit Produktions-Eingangsdaten korreliert werden, und/oder

die statistischen Analysen von Produktionsmessungs-Daten mit Produktions-Eingangsdaten korreliert werden,
um Korrelationsergebnisse zu generieren und aus den Korrelationsergebnissen anhand von Ableitungsregeln mindestens einen Handlungsvorschlag und/oder mindestens eine Handlungsanweisung abzuleiten, die mindestens einer mit der inline-Produktion der Solarzellen befassten Personengruppe zugeordnet sind, und der mindestens eine Handlungsvorschlag und/oder die mindestens eine Handlungsanweisung an die mindestens eine zugeordnete Personengruppe übermittelt wird. Aus der Korrelation der unterschiedlichen Daten-Gruppen miteinander und den sich daraus im Gesamt-Datenraum ergebenden Bilder lässt sich bereits das Anbahnen von Performance-Einbrüchen prognostizieren, auch wenn die teilgefertigte Solarzelle in der inline-Produktionskette noch nicht bis zur Test-Messung vorangeschritten ist. Dadurch kann solchen Performance-Einbrüchen früher gegen gesteuert werden.

Bevorzugt ist das Verfahren zum Optimieren der inline-Produktion von Solarzellen derart weiter gebildet, dass die Ableitungsregeln des optoelektronischen Solarzellen-Testsystems unter der Zielstellung herzustellender Solarzellen mit optimierter Qualität durch ein Feedbacksystem überprüft und adaptiert werden, wobei das Feedbacksystem durch mindestens eine mit der inline-Produktion der Solarzellen befasste Personengruppe mit Feedback-Informationen versorgt wird. Besonders bevorzugt ist das Fachpersonal mit übergreifenden Kenntnissen der Zusammenhänge und viel empirisch gewonnener Erfahrung an der Produktionsanlage für diese Aufgabe prädestiniert. Es kann eine vollständig manuelle Optimierung oder eine teilautomatisierte Optimierung vorgenommen werden. Bei der teilautomatisierten Optimierung schlägt das System bereits gewisse Abwandlungen der Ableitungsregeln vor, die seitens des Fachpersonals bestätigt, adaptiert oder verworfen werden. Dabei werden Systeme mit künstlicher Intelligenz beispielsweise unter Einsatz neuronaler Netze eingesetzt und angelernt.

Eine weitere vorteilhafte Variante des Verfahrens zum Optimieren der inline-Produktion von Solarzellen sieht vor, dass die Ableitungsregeln durch ein automatisiertes Optimierungsprogramm überprüft und adaptiert werden. Das zuständige Fachpersonal kann immer noch zur Plausibilitätskontrolle der geprüften und adaptierten Ableitungsregeln herangezogen werden.

Eine bevorzugte Weiterbildung des Verfahrens zum Optimieren der inline-Produktion von Solarzellen ist, dadurch gekennzeichnet, dass Handlungsvorschläge und/oder Handlungsanweisungen, auf die seitens der zugeordneten Personengruppe nach Ablauf einer Quittierungszeit nicht reagiert wird, mit einer höheren Wahrnehmbarkeit oder einer höheren Relevanzstufe kommuniziert werden und/oder an weitere Personengruppen kommuniziert werden. Auf diese Weise wird eine zeitnahe Reaktion auf die vom Testsystem generierten Mitteilungen gewährleistet. Das versehentliche Übersehen oder das willentliche Ignorieren von Mitteilungen wird somit hinsichtlich seiner Wahrscheinlichkeit reduziert, ebenso wie die Reaktionszeit zur Einleitung von Gegenmaßnahmen bei drohenden oder bereits eingesetzten Performance-Einbußen der in der inline-Produktionsanlage produzierten Solarzellen.
h

Mit Vorteil ist das Verfahren zum Optimieren der inline-Produktion von Solarzellen dahin gehend weitergebildet, dass aus den generierten Korrelationsergebnissen Daten-Muster ermittelt werden, die Verschleißerscheinungen und/oder Wartungsbedarf von Prozesseinrichtungen indizieren. Es machen sich Verschleißerscheinungen und Wartungsbedarf an Prozesseinrichtungen in der multidimensionalen Betrachtung des Gesamtdatenraumes der Test-Messungen und Produktions-Messungen früher bemerkbar, wodurch sich ein Produktionsstopp mit einem längeren Produktionsstillstand vermeiden lässt, weil die entsprechenden Vorkehrungen zur Wartung oder das auszutauschende Verschleißteil bereits bereit gehalten werden kann, um im Bedarfsfall rasch agieren zu können. Dadurch werden Stillstands-Zeiten der inline-Produktionsanlage weiter reduziert und somit Produktionskosten gesenkt.

Weitere Aspekte der Erfindungen werden anhand einer rein beispielhaften Ausführungsform des Testsystems und des Verfahrens zum Optimieren der inline-Produktion von Solarzellen unter Einsatz eines solchen Testsystems anhand der nachfolgenden Figuren erläutert.

Es zeigen:
- Fig. 1: eine beispielhafte Ausführungsform eines optoelektronischen Solarzellen-Testsystems integriert in einer inline-Solarzellen-Produktionsanlage in rein schematischer Darstellung und
- Fig.2: eine beispielhafte Ausführungsform eines Verfahrens zum Optimieren der Produktion von Solarzellen mittels einer inline-Solarzellen-Produktionsanlage unter Einsatz eines optoelektronischen Solarzellen-Testsystems wie es insbesondere in Fig. 1 dargestellt ist.

Eine inline-Solarzellen-Produktionsanlage ist hier schematisch und beispielhaft durch die lineare Verkettung einer Mehrzahl von Prozesseinrichtungen PE1,PE2,PEn dargestellt. In einer solchen in-line-Produktionsanlage können beispielsweise Solarzellen SC auf der Basis von Halbleiterwafern herstellt werden. Die fertig produzierte Solarzellen SC wird mittels einer Belichtungs- und Messeinrichtung 10 zur Ermittlung ihre Qualitätsparameter vermessen. Die Belichtungs- und Messeinrichtung 10 ist Bestandteil eines optoelektronischen Solarzellen-Testsystems, das im Fachjargon auch als "Flasher" bezeichnet wird. Zur Ermittlung der Qualitätsparameter werden üblicherweise eine Reihe von Testmessungen zur Erzeugung von Testmessungs-Daten TM durchgeführt.

Die von den jeweiligen Solarzellen SC ermittelten Testmessungs-Daten TM fließen einer dem Testsystem zugeordneten Steuer- und Auswerteeinheit 20 zu. Diese Steuer- und Auswerteeinheit 20 erhält weiterhin Produktionsmessungs-Daten PM von jeder Prozesseinrichtung PE1, PE2, PEn, die mit mindestens einer ihr zugeordneten Produktions-Messeinrichtung PM1,PM2,PMn ausgerüstet ist. Jede der Produktions-Messeinrichtungen PM1,PM2,PMn erzeugt jeweils spezifische Produktionsmessungs-Daten PM. Diese Produktionsmessungs-Daten PM fließen wiederum der Steuer- und Auswerteeinheit 20 des Testsystems zu.

Dabei kann eine gewisse Auswertung der an den jeweiligen Produktions-Messeinrichtungen PM1,PM2,PMn generierten Produktionsmessungs-Daten PM bereits auf Seiten der Produktions-Messeinrichtungen PM1, PM2, PMn erfolgen. Die Produktions-Messeinrichtungen PM1,PM2,PMn sind dann derart ausgebildet, dass diese nicht nur die Produktionsmessungs-Daten PM generieren sondern diese auch mittels eigener Auswerteeinheiten weiter verarbeiten. Es bleiben dann weiterhin Produktionsmessungs-Daten PM, die jedoch bereits in einer ganz oder teilweise verarbeiteten Form der Steuer- und Auswerteeinheit 20 zufließen. Bei dieser vollständigen oder teilweisen Verarbeitung der Prozessmessungs-Daten PM entstehen statistische Analysen der Prozessmessungs-Daten PMstat. Dabei handelt es sich beispielsweise um die Bildung zeitlicher Mittelwerte und/oder um Streuwertanalyse-Werte. Derartige Analysen können mangels entsprechender Auswerteeinheiten der Produktions-Messeinrichtungen PM1,PM2,PMn jedoch ebenso zentral in der Steuer- und Auswerteeinheit 20 des optoelektronischen Solarzellen-Testsystems erfolgen. Die Steuer- und Auswerteeinheit 20 kann strukturell eng an die Belichtungs- und Messeinrichtung 10 gekoppelt sein. Ebenso ist denkbar, dass diese Funktionalität räumlich entkoppelt vom Ort der Erzeugung der Testmessungs-Daten TM erfolgt. Es muss nur sicher gestellt sein, dass die Testmessungs-Daten TM der Steuer- und Auswerteeinheit 20 zufließen.

Die Produktionsmessungs-Daten PM können durch verschiedene Messungen im Bereich der Prozesseinrichtungen PE1,PE2,PEn generiert werden. Dies sind insbesondere Messungen an der teilprozessierten Solarzelle SC in der jeweiligen Prozesseinrichtung PE1,PE2,PEn. Alternativ oder kumulativ generieren die Produktions-Messeinrichtungen PM1,PM2,PMn der Prozesseinrichtungen auch Produktionsmessungs-Daten PM in Form von Prozessparametern der in den jeweiligen Prozesseinrichtungen PE1,PE2,PEn ablaufenden Bearbeitungsverfahren. Zur Qualitätssicherung ist es ohnehin erforderlich diese Prozessparameter durch Messungen zu kontrollieren. Insofern sind die Produktions-Messeinrichtungen PM1,PM2,PMn sämtlicher Ausführungsformen des optoelektronischen Solarzellen-Testsystems derart ausgebildet und eingerichtet, dass diese viele Arten von Produktionsmessungs-Daten der einen oder anderen Variante generieren und zur Verfügung stellen.

Als weiterer Datenzufluss fließen der Steuer- und Auswerteeinheit 20 so genannte Produktions-Eingangs-Daten PED zu. Dies sind Materialparameter sowohl der zum Einsatz kommenden Rohstoffe, die zur Solarzelle weiter verarbeitet werden, als auch Materialparameter der Verbrauchsmaterialien, die in den einzelnen Bearbeitungsverfahren der jeweiligen Prozesseinrichtungen PE1,PE2,PEn zum Einsatz kommen.

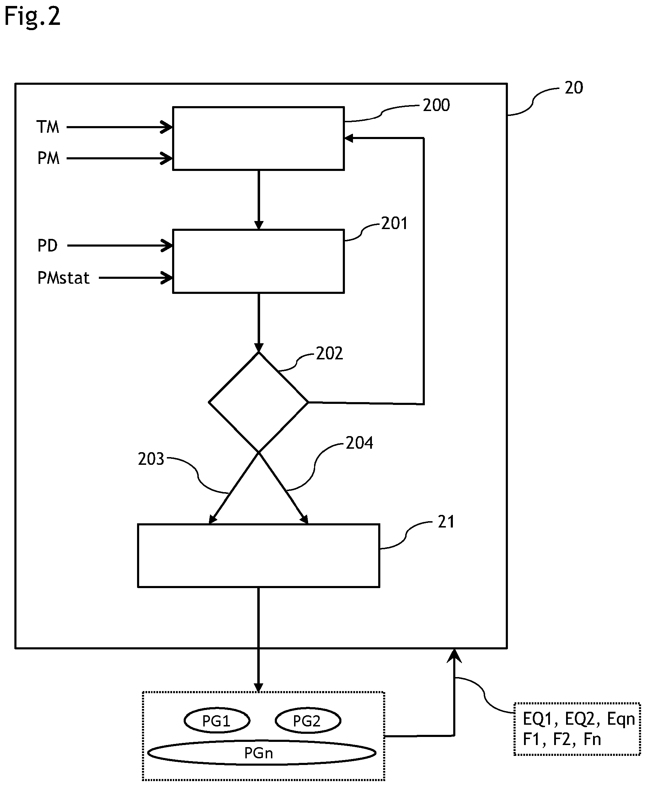

In der Gesamtheit des Datenraumes, der der Steuer- und Auswerteeinheit 20 zur Verfügung steht, führt diese statistische Analysen durch und korreliert sie miteinander. Aus den Analysen und/oder Korrelationen der Daten werden anhand von Ableitungsregeln Handlungsvorschläge oder Handlungsanweisungen generiert. Dieses Verfahren wird nachfolgend im Zusammenhang mit Fig.2 näher erläutert. Diese Handlungsvorschläge oder Handlungsanweisungen werden mittels einer zum Testsystem gehörigen Kommunikationseinrichtung 21 an Displayvorrichtungen PD1,PD2,PDn der Prozesseinrichtungen PE1,PE2,PEn transferiert und dort angezeigt. Ergänzend oder alternativ können die Handlungsvorschläge und Handlungsanweisungen auch angezeigt werden an einer zur Steuer- und Auswerteeinheit 20 gehörigen Displayvorrichtung 22 oder an einer zur Belichtungs- und Messeinrichtung 10 gehörigen Displayvorrichtung 12.

Insbesondere über die Displayvorrichtungen der Prozesseinrichtungen PD1,PD2,PDn gelangen die Handlungsvorschläge und Handlungsanweisungen unterschiedlichen Personengruppen PG1,PG2, PGn entlang der in-line-Solarzellen-Produktionsanlage zur Kenntnis. Ergänzend oder alternativ zu den Displayvorrichtungen der Prozesseinrichtungen PD1,PD2,PDn lassen sich die Handlungsanweisungen mittels der Kommunikationseinrichtung 21 auch drahtlos an mobile Endgeräte M1,M2,Mn der jeweils zugeordneten Personengruppen PG1,PG2,PGn übermitteln.

Weiterhin weist die Steuer- und Auswerteeinheit 20 einen digitalen Speicher 23 auf, in dem die Ableitungsregeln abgelegt sind. Außerdem ist in dieser Ausführungsform eine digitalen Schnittstelle 24 der Steuer- und Auswerteeinheit 20 vorgesehen, über die sich die Ableitungsregeln durch ein anzuschließendes Gerät verändern lassen.

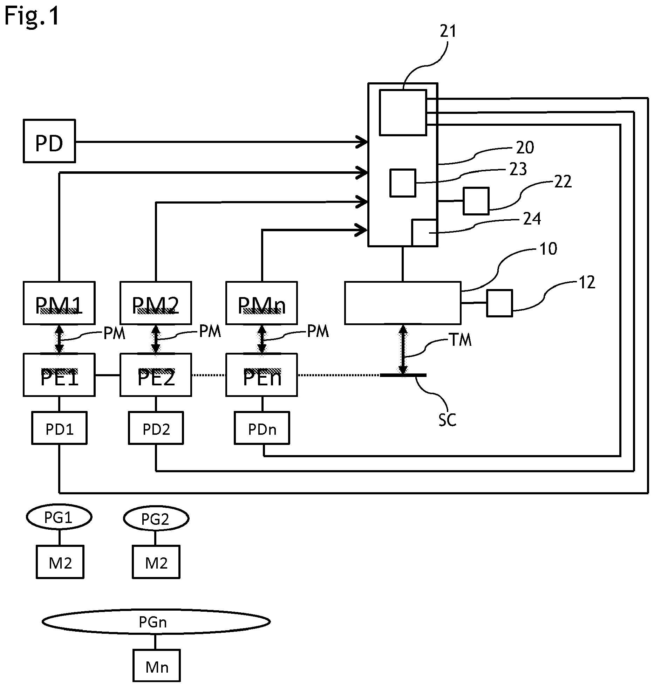

Fig. 2 zeigt eine beispielhafte Ausführungsform eines Verfahrens zum Optimieren der Produktion von Solarzellen mittels einer inline-Solarzellen-Produktionsanlage unter Einsatz eines optoelektronischen Solarzellen-Testsystems wie es insbesondere in Fig. 1 dargestellt ist. Dieses Verfahren ist funktional in der Steuer- und Auswerteeinheit 20 des Solarzellen-Testsystems realisiert. Dazu erfolgen in der Steuer- und Auswerteeinheit 20 statistische Analysen der von der Belichtungs- und Messeinrichtung 10 des Solarzellen-Testsystems zur Verfügung gestellten Testmessungs-Daten TM, die als TMstat bezeichnet sind. Ebenso können solche statistische Analysen mit den seitens der Produktions-Messeinrichtungen PM1,PM2,PMn generierten Produktionsmessungs-Daten PM durchgeführt werden. Wie vorangehend beschrieben führen die Produktions-Messeinrichtungen PM1,PM2,PMn Messungen im Rahmen der in den jeweiligen Prozesseinrichtungen PE1,PE2,PEn ablaufenden Bearbeitungsverfahren durch und stellen die gewonnenen Messwerte als Produktionsmessungs-Daten PM zur Verfügung. Die statistischen Analysen der Produktionsmessungs-Daten PMstat können bereits durch entsprechende Auswerteeinheiten der Produktions-Messeinrichtungen PM1,PM2,PMn und/oder durch die Steuer- und Auswerteeinheit 20 des Solarzellen-Testsystems generiert werden. Es liegen somit statistische Analysen der Testmessungsdaten TMstat, statistische Analysen der Produktionsmessungs-Daten PMstat und die vorangehend beschriebenen Produktions-Eingangs-Daten PED vor. Aus diesen Daten werden innerhalb der Steuer- und Auswerteeinheit Korrelationsanalysen 201 zur Erzeugung von Korrelationsergebnissen durchgeführt. Diese Korrelationsergebnisse werden in einem weiteren Verfahrensschritt unter Anwendung von Ableitungsregeln 202 verarbeitet. Als Ergebnis liefert die Anwendung der Ableitungsregeln 202 mindestens einen Handlungsvorschlag 203 und/oder mindestens eine Handlungsanweisung 204 und/oder es werden weitere Testmessungs-Daten TM oder Produktionsmessungs-Daten PM oder mindestens eine weitere Korrelation ausgewählt aus den statistischen Analysen der Testmessungs-Daten TMstat, den statistischen Analysen der Produktionsmessungs-Daten PMstat und den Produktions-Eingangs-Daten PED wird angefordert bevor erneut die Anwendung der Ableitungsregeln 202 auf die Korrelationsergebnisse 201 erfolgt. Generierte Handlungsvorschläge 203 und Handlungsanweisungen 204 werden über die Kommunikationseinrichtung 21 der Steuer und Auswerteeinheit 20 an die unterschiedlichen Personengruppen PG1,PG2,PGn übermittelt, die in verschiedenen Aufgabenbereichen innerhalb der inline-Solarzellen-Produktionsanlage im Einsatz sind. Diese Personengruppen PG1,PG2,PGn generieren bevorzugt Empfangsquittungssignale EQ1,EQ2,EQn, mit denen die Kenntnisnahme der Handlungsvorschläge 203 und/oder Handlungsanweisungen 204 bestätigt wird. Weiterhin ist bevorzugt vorgesehen, dass seitens der unterschiedlichen Personengruppen PG1,PG2,PGn Auswertungssignale generiert werden, die in Zusammenhang mit den zuvor erhaltenen Handlungsvorschlägen 203 und Handlungsanweisungen 204 stehen. Dadurch soll in einer Art Feedback-Schleife der Steuer- und Auswerteeinheit 20 zur Kenntnis gelangen, ob und inwieweit seitens der unterschiedlichen Personengruppen PG1,PG2,PGn die erhaltenen Handlungsvorschläge 203 und/oder Handlungsanweisungen 204 als zutreffend eingestuft werden. Diese Feedback-Schleife lässt sich dafür nutzen, die Steuer- und Auswerteeinheit 20 mit einer selbstlernenden Funktionalität auszugestalten.

### Bezugszeichenliste:

- 10: Belichtungs- und Messeinrichtung
- 12: Displayvorrichtung der Belichtungs- und Messeinrichtung
- 20: Steuer- und Auswerteeinheit
200 statistische Analysen von Testmessungs-Daten und Produktionsmessungs-Daten
201 Korrelationsergebnisse gewonnen aus der Korrelation statistischer Analysen von Testmessungs-Daten und/oder statistischer Analysen von Produktionsmessungs-Daten und/oder Produktions-Eingangs-Daten
202 Anwendung von Ableitungsregeln auf Korrelationsergebnisse
203 Handlungsvorschlag
204 Handlungsanweisung
205 Feedbacksystem

- 21: Kommunikationseinrichtung
- 22: Displayvorrichtung der Steuer- und Auswerteeinheit
- 23: digitaler Speicher der Steuer- und Auswerteeinheit
- 24: digitale Schnittstelle der Steuer- und Auswerteeinheit

- PE1, PE2, PEn: Prozesseinrichtungen der inline-Solarzellen-Produktionsanlage
- PM1, PM2, PMn: Produktions-Messeinrichtungen der Prozesseinrichtungen
- PD1, PD2, PDn: Displayvorrichtungen der Prozesseinrichtungen
- TM: Testmessungs-Daten
- TMstat: statistische Analysen der Testmessungs-Daten
- PM: Produktionsmessungs-Daten
- PMstat: statistische Analysen der Produktionsmessungs-Daten
- PED: Produktions-Eingangs-Daten
- PG1, PG2, PGn: zugeordnete Personengruppen
- M1, M2, Mn: mobile Endgeräte der zugeordneten Personengruppen
- EQ1, EQ2, EQn: Empfangsquittungssignale generiert durch Personengruppen
- F1, F2, Fn: Auswertungssignale kommuniziert durch Personengruppen
- SC: Solarzelle

## Patentansprüche

1. Optoelektronisches Solarzellen-Testsystem für eine inline-Solarzellen-Produktionsanlage, das Solarzellen-Testsystem aufweisend:
- eine Belichtungs- und Messeinrichtung (10) zur inline-Vermessung von Solarzellen und
- eine mit der Belichtungs- und Messeinrichtung (10) gekoppelte Steuer-und Auswerteeinheit (20),
wobei die Belichtungs- und Messeinrichtung (10) ausgebildet und eingerichtet ist, an einer Solarzelle (SC) eine oder mehrere Test-Messungen (TM) zum Generieren von Testmessungs-Daten durchzuführen,
wobei die Test-Messungen (TM) ausgewählt sind aus der Gruppe umfassend:
- Infrarotaufnahme-Messung einer in Sperrrichtung bestromten Solarzelle zur Ermittlung lokaler Kurzschlüsse in der Solarzelle,
- Blitzbelichtung mit einem Belichtungsspektrum zur Messung mindestens einer Strom-Spannung-Kennlinie der Solarzelle ,
- eine Mehrzahl spektral differenzierter Blitzbelichtungen zur Messung spektral aufgelöster Strom- Kennlinien der Solarzelle und/oder zur Messung einer quasi-externen Quanten-Effizienz der Solarzelle,
- Elektro-Lumineszenz-Messung der Solarzelle insbesondere zur Ermittlung von Mikrorissen im Solarzellenmaterial und/oder zur Ermittlung von Elektrodenstruktur-Unterbrechungen und/oder von Kontaktproblemen zwischen Elektrodenstrukturen und Substrat und/oder zur Ermittlung elektrisch inaktiver Bereiche und/oder lokaler Kurzschlüsse,
- Messung der Hellkennlinie und Messung der Dunkelkennlinie der Solarzelle zur Errechnung des Serienwiderstands der Solarzelle
- Widerstandsmessung der Elektrodenstrukturen aufweisend Elektrodenfinger zur Ermittlung der Qualität der metallischen Elektrodenstrukturen,
**dadurch gekennzeichnet, dass**
die Steuer- und Auswerteeinheit (20) eingerichtet und ausgebildet ist,
mit Testmessungs-Daten gleicher Test-Messungen (TM), vorgenommen mittels der Belichtungs- und Messeinrichtung (10) an einer Vielzahl inline produzierter Solarzellen (SC), statistische Analysen (200) durchzuführen und
- die statistischen Analysen (200) der Testmessungs-Daten unterschiedlicher Test-Messungen (TM) miteinander zu korrelieren und/oder
- die statistischen Analysen von Testmessungs-Daten (TMstat) mit statistischen Analysen von Produktionsmessungs-Daten (PMstat) zu korrelieren und/oder
- die statistischen Analysen von Testmessungs-Daten (TMstat) und/oder die statistischen Analysen von Produktionsmessungs-Daten (PMstat) mit Produktions-Eingangsdaten (PED) zu korrelieren,
um Korrelationsergebnisse (201) zu generieren und aus den Korrelationsergebnissen (201) anhand von Ableitungsregeln (202) mindestens einen Handlungsvorschlag (203) und/oder mindestens eine Handlungsanweisung (204) abzuleiten, die mindestens einer mit der inline-Produktion der Solarzellen befassten Personengruppe (PG1,PG2,PGn) zugeordnet sind, wobei die Steuer- und Auswerteeinheit (20) eine Kommunikationseinrichtung (21) aufweist, die den mindestens einen Handlungsvorschlag (203) und/oder die mindestens eine Handlungsanweisung (204) an die mindestens eine zugeordnete Personengruppe (PG1,PG2,PGn) übermittelt.

2. Optoelektronisches Solarzellen-Testsystem gemäß Anspruch 1, **dadurch gekennzeichnet, dass** die Kommunikationseinrichtung (21) derart eingerichtet und ausgebildet ist, dass
- eine an der Belichtungs- und Messeinrichtung (10) angeordnete Displayvorrichtung (12) und/oder
- eine an der Steuer- und Auswerteeinheit (20) angeordnete Displayvorrichtung (22) und/oder
- eine an einer Prozesseinrichtung (PE1,PE2,PEn) der inline-Solarzellen-Produktionsanlage angeordnete Displayvorrichtung (PD1,PD2,PDn) und/oder
- ein mobiles digitales Endgerät (M1,M2,Mn) den mindestens einen Handlungsvorschlag (203) und/oder die mindestens eine Handlungsanweisung (204) an die mindestens eine zugeordnete Personengruppe (PG1,PG2,PGn) kommuniziert.

3. Optoelektronisches Solarzellen-Testsystem gemäß Anspruch 2, **dadurch gekennzeichnet, dass** die Kommunikationseinrichtung (21) derart ausgebildet und eingerichtet ist, dass die Kommunikationseinrichtung (21) abhängig von dem mindestens einen abgeleiteten Handlungsvorschlag (203) und/oder der mindestens einen abgeleiteten Handlungsanweisung (204) die mindestens eine spezifisch zugeordnete Personengruppe (PG1,PG2,PGn) auswählt.

4. Optoelektronisches Solarzellen-Testsystem gemäß einem der Ansprüche 2 oder 3, **dadurch gekennzeichnet, dass** die Steuer- und Auswerteinheit (20) derart eingerichtet und ausgebildet ist,
- die statistischen Analysen der Produktionsmessungs-Daten (PMstat) mittels empfangener Produktions-Messwerte (PM) von Produktions-Messeinrichtungen (PM1,PM2,PMn) durchzuführen und/oder
- von Produktions-Messeinrichtungen (PM1,PM2,PMn) die in den Produktions-Messeinrichtungen (PM1,PM2,PMn) generierten statistischen Analysen der Produktionsmessungs-Daten (PMstat) zu empfangen.

5. Optoelektronisches Solarzellen-Testsystem gemäß einem der Ansprüche 2 bis 4, **dadurch gekennzeichnet, dass** die Ableitungsregeln (202) in einem digitalen Speicher (23) der Steuer- und Auswerteeinheit (20) abgelegt sind.

6. Optoelektronisches Solarzellen-Testsystem gemäß Anspruch 5, **dadurch gekennzeichnet, dass** die Ableitungsregeln (202) in dem digitalen Speicher (23) der Steuer- und Auswerteeinheit (20) über eine digitale Schnittstelle (24) veränderbar abgelegt sind.

7. Optoelektronisches Solarzellen-Testsystem gemäß einem der Ansprüche 2 bis 6, **dadurch gekennzeichnet, dass** die Displayvorrichtung (12) der Belichtungs- und Messeinrichtung (10) und/oder die Displayvorrichtung (22) der Steuer-und Auswerteeinheit (20) und/oder die Displayvorrichtungen (PD1,PD2,PDn) der Prozesseinrichtungen (PE1,PE2,PEn) und/oder die mobilen digitalen Endgeräte (M1,M2,Mn) zur Aufnahme eines Empfangsquittungssignals (EQ1,EQ2,EQn) generiert von der mindestens einen spezifisch zugeordneten Personengruppe (PG1,PG2,PGn) ausgebildet und eingerichtet sind.

8. Optoelektronisches Solarzellen-Testsystem gemäß einem der Ansprüche 2 bis 7, **dadurch gekennzeichnet, dass** die Displayvorrichtung (12) der Belichtungs- und Messeinrichtung (10) und/oder die Displayvorrichtung (22) der Steuer-und Auswerteeinheit (20) und/oder die Displayvorrichtung (PD1,PD2,PDn) der Prozesseinrichtung (PE1,PE2,PEn) und/oder mindestens eines der mobilen digitalen Endgeräte (M1,M2,Mn) zur Aufnahme eines Auswertungssignals (F1,F2,Fn) ausgebildet und eingerichtet ist, wobei das Auswertungssignal (F1,F2,Fn) seitens der mindestens einen zugeordneten Personengruppe (PG1,PG2,PGn) kommuniziert, ob der von der Steuer- und Auswerteeinheit (20) generierte Handlungsvorschlag (203) und/oder die von der Steuer- und Auswerteeinheit (20) generierte Handlungsanweisung (204) aus Sicht der zugeordneten Personengruppe (PG1,PG2,PGn) zutreffend gewesen ist.

9. Optoelektronisches Solarzellen-Testsystem gemäß Anspruch 8, **dadurch gekennzeichnet, dass** die Steuer- und Auswerteeinheit (20) eingerichtet und ausgebildet ist, eine statistische Analyse zwischen den generierten Handlungsvorschlägen (203) und Handlungsanweisungen (204) und den in Reaktion darauf erhaltenen Auswertungssignalen (F1,F2,Fn) durchzuführen und abhängig von diesen statistischen Analysen die Ableitungsregeln (202) zu verifizieren und zu adaptieren.

10. Verfahren zum Optimieren der Produktion von Solarzellen mittels einer inline-Solarzellen-Produktionsanlage unter Einsatz eines optoelektronischen Solarzellen-Testsystems gemäß einem der vorangehenden Ansprüche, wobei die inline-Solarzellen-Produktionsanlage aus einer Mehrzahl von Prozesseinrichtungen (PE1,PE2,PEn) mit Prozess-Messeinrichtungen (PM1,PM2,PMn) zum Generieren von Produktionsmessungs-Daten (PM) aufgebaut ist.

11. Verfahren zum Optimieren der inline-Produktion von Solarzellen gemäß Anspruch 10, **dadurch gekennzeichnet, dass**
- die statistischen Analysen der Testmessungs-Daten (TMstat) unterschiedlicher Test-Messungen miteinander korrelieren werden und/oder
- die statistischen Analysen der Testmessungs-Daten (TMstat) von Test-Messungen mit statistischen Analysen der Produktionsmessungs-Daten (PMstat) von Produktions-Messungen korreliert werden und/oder
- die statistischen Analysen von Test-Messungs-Daten (TMstat) mit Produktions-Eingangsdaten (PED) korreliert werden, und/oder die statistischen Analysen von Produktions-Messungs-Daten (PMstat) mit Produktions-Eingangsdaten (PED) korreliert werden,
um Korrelationsergebnisse (201) zu generieren und aus den Korrelationsergebnissen (201) anhand von Ableitungsregeln (202) mindestens einen Handlungsvorschlag (203) und/oder mindestens eine Handlungsanweisung (204) abzuleiten, die mindestens einer mit der inline-Produktion der Solarzellen befassten Personengruppe (PG1,PG2,PGn) zugeordnet sind, und der mindestens eine Handlungsvorschlag (203) und/oder die mindestens eine Handlungsanweisung (204) an die mindestens eine zugeordnete Personengruppe (PG1,PG2,PGn) übermittelt wird.

12. Verfahren zum Optimieren der inline-Produktion von Solarzellen gemäß Anspruch 11, **dadurch gekennzeichnet, dass** die Ableitungsregeln (202) des optoelektronischen Solarzellen-Testsystems unter der Zielstellung herzustellender Solarzellen mit optimierter Qualität durch ein Feedbacksystem überprüft und adaptiert werden, wobei das Feedbacksystem (205) durch mindestens eine mit der inline-Produktion der Solarzellen befasste Personengruppe (PG1,PG2,PGn) mit Feedback-Informationen (F1,F2,Fn) versorgt wird.

13. Verfahren zum Optimieren der inline-Produktion von Solarzellen gemäß Anspruch 12, **dadurch gekennzeichnet, dass** die Ableitungsregeln (202) durch ein automatisiertes Optimierungsprogramm überprüft und adaptiert werden.

14. Verfahren zum Optimieren der inline-Produktion von Solarzellen gemäß einem der Ansprüche 10 bis 13, **dadurch gekennzeichnet, dass** Handlungsvorschläge (203) und/oder Handlungsanweisungen (204), auf die seitens der zugeordneten Personengruppe (PG1,PG2,PGn) nach Ablauf einer Quittierungszeit nicht reagiert wird, mit einer höheren Wahrnehmbarkeit oder einer höheren Relevanzstufe kommuniziert werden und/oder an weitere Personengruppen (PG1,PG2,PGn) kommuniziert werden.

15. Verfahren zum Optimieren der inline-Produktion von Solarzellen gemäß einem der Ansprüche 10 bis 14, **dadurch gekennzeichnet, dass** aus den generierten Korrelationsergebnissen (201) Daten-Muster ermittelt werden, die Verschleißerscheinungen und/oder Wartungsbedarf von Prozesseinrichtungen (PE1,PE2,PEn) indizieren.

## Claims

1. An optoelectronic solar cell test system for an in-line solar cell production plant, the solar cell test system comprising:
- an exposure and measuring device (10) for in-line measurement of solar cells, and
- a control and evaluation unit (20) coupled to the exposure and measuring device (10),
the exposure and measuring device (10) being configured and adapted to carry out one or more test measurements (TM) on a solar cell (SC) in order to generate test measurement data,
the test measurements (TM) being selected from the group consisting of:
- infrared image measurement of a solar cell energized in the reverse direction in order to determine local short circuits in the solar cell,
- flash exposure with an exposure spectrum in order to measure at least one current-voltage characteristic curve of the solar cell,
- a multiplicity of spectrally differentiated flash exposures in order to measure spectrally resolved current characteristic curves of the solar cell and/or in order to measure a quasi-external quantum efficiency of the solar cell,
- electroluminescence measurement of the solar cell, particularly in order to determine microcracks in the solar cell material and/or in order to determine electrode structure interruptions and/or contact problems between electrode structures and the substrate and/or in order to determine electrically inactive regions and/or local short circuits,
- measurement of the bright characteristic curve and measurement of the dark characteristic curve of the solar cell in order to calculate the series resistance of the solar cell,
- resistance measurement of the electrode structures comprising electrode fingers in order to determine the quality of the metal electrode structures, **characterized in that**
the control and evaluation unit (20) is adapted and configured to carry out statistical analyses (200) with test measurement data of the same test measurements (TM), carried out by means of the exposure and measuring device (10) on a plurality of solar cells (SC) produced in-line, and
- to correlate the statistical analyses (200) of the test measurement data of different test measurements (TM) with one another and/or
- to correlate the statistical analyses of test measurement data (TMstat) with statistical analyses of production measurement data (PMstat) and/or
- to correlate the statistical analyses of test measurement data (TMstat) and/or the statistical analyses of production measurement data (PMstat) with production input data (PED),
in order to generate correlation results (201) and to derive at least one handling proposal (203) and/or at least one handling instruction (204), which are assigned to at least one person group (PG1, PG2, PGn) involved in the in-line production of the solar cells, from the correlation results (201) with the aid of derivation rules (202), the control and evaluation unit (20) comprising a communication device (21) which transmits the at least one handling proposal (203) and/or the at least one handling instruction (204) to the at least one assigned person group (PG1, PG2, PGn).

2. The optoelectronic solar cell test system as claimed in claim 1, **characterized in that** the communication device (21) is adapted and configured in such a way that
- a display apparatus (12) arranged on the exposure and measuring device (10) and/or
- a display apparatus (22) arranged on the control and evaluation unit (20) and/or
- a display apparatus (PD1, PD2, PDn) arranged on a process device (PE1, PE2, PEn) of the in-line solar cell production plant and/or
- a mobile digital terminal (M1, M2, Mn) communicates the at least one handling proposal (203) and/or the at least one handling instruction (204) to the at least one assigned person group (PG1, PG2, PGn).

3. The optoelectronic solar cell test system as claimed in claim 2, **characterized in that** the communication device (21) is adapted and configured in such a way that the communication device (21) selects the at least one specifically assigned person group (PG1, PG2, PGn) as a function of the at least one derived handling proposal (203) and/or the at least one derived handling instruction (204).

4. The optoelectronic solar cell test system as claimed in one of claims 2 and 3, **characterized in that** the control and evaluation unit (20) is adapted and configured
- to carry out the statistical analyses of the production measurement data (PMstat) by means of received production measurement values (PM) of production measuring devices (PM1, PM2, PMn) and/or
- to receive from production measuring devices (PM1, PM2, PMn) the statistical analyses, generated in the production measuring devices (PM1, PM2, PMn), of the production measurement data (PMstat).

5. The optoelectronic solar cell test system as claimed in one of claims 2 to 4, **characterized in that** the derivation rules (202) are stored in a digital memory (23) of the control and evaluation unit (20).

6. The optoelectronic solar cell test system as claimed in claim 5, **characterized in that** the derivation rules (202) are stored in the digital memory (23) of the control and evaluation unit (20) in such a way that they can be modified via a digital interface (24).

7. The optoelectronic solar cell test system as claimed in one of claims 2 to 6, **characterized in that** the display apparatus (12) of the exposure and measuring device (10) and/or the display apparatus (22) of the control and evaluation unit (20) and/or the display apparatuses (PD1, PD2, PDn) of the process devices (PE1, PE2, PEn) and/or the mobile digital terminals (M1, M2, Mn) are configured and adapted to receive a reception acknowledgement signal (EQ1, EQ2, EQn) generated by the at least one specifically assigned person group (PG1, PG2, PGn).

8. The optoelectronic solar cell test system as claimed in one of claims 2 to 7, **characterized in that** the display apparatus (12) of the exposure and measuring device (10) and/or the display apparatus (22) of the control and evaluation unit (20) and/or the display apparatus (PD1, PD2, PDn) of the process device (PE1, PE2, PEn) and/or at least one of the mobile digital terminals (M1, M2, Mn) are configured and adapted to receive an evaluation signal (F1, F2, Fn), the evaluation signal (F1, F2, Fn) communicating on the part of the at least one assigned person group (PG1, PG2, PGn) whether the handling proposal (203) generated by the control and evaluation unit (20) and/or the handling instruction (204) generated by the control and evaluation unit (20) was appropriate in the view of the assigned person group (PG1, PG2, PGn).

9. The optoelectronic solar cell test system as claimed in claim 8, **characterized in that** the control and evaluation unit (20) is adapted and configured to carry out a statistical analysis between the generated handling proposals (203) and handling instructions (204) and the evaluation signals (F1, F2, Fn) obtained in response thereto, and to verify and adapt the derivation rules (202) on the basis of these statistical analyses.

10. A method for optimizing the production of solar cells by means of an in-line solar cell production plant by using an optoelectronic solar cell test system as claimed in one of the preceding claims, wherein the in-line solar cell production plant is composed of a multiplicity of process devices (PE1, PE2, PEn) having process measuring devices (PM1, PM2, PMn) for generating production measurement data (PM).

11. The method for optimizing the in-line production of solar cells as claimed in claim 10, **characterized in that**
- the statistical analyses of the test measurement data (TMstat) of different test measurements are correlated with one another and/or
- the statistical analyses of the test measurement data (TMstat) of test measurements are correlated with statistical analyses of the production measurement data (PMstat) of production measurements and/or
- the statistical analyses of test measurement data (TMstat) are correlated with production input data (PED), and/or
the statistical analyses of production measurement data (PMstat) are correlated with production input data (PED),
in order to generate correlation results (201) and to derive at least one handling proposal (203) and/or at least one handling instruction (204), which are assigned to at least one person group (PG1, PG2, PGn) involved in the in-line production of the solar cells, from the correlation results (201) with the aid of derivation rules (202), and the at least one handling proposal (203) and/or the at least one handling instruction (204) is transmitted to the at least one assigned person group (PG1, PG2, PGn).

12. The method for optimizing the in-line production of solar cells as claimed in claim 11, **characterized in that** the derivation rules (202) of the optoelectronic solar cell test system are checked and adapted by a feedback system with the aim of producing solar cells with optimized quality, the feedback system (205) being supplied with feedback information (F1, F2, Fn) by at least one person group (PG1, PG2, PGn) involved in the in-line production of the solar cells.

13. The method for optimizing the in-line production of solar cells as claimed in claim 12, **characterized in that** the derivation rules (202) are checked and adapted by an automated optimization program.

14. The method for optimizing the in-line production of solar cells as claimed in one of claims 10 to 13, **characterized in that** handling proposals (203) and/or handling instructions (204) to which there is no response on the part of the assigned person group (PG1, PG2, PGn) after an acknowledgement time has elapsed are communicated with a higher noticeability or a higher relevance level and/or communicated to further person groups (PG1, PG2, PGn).

15. The method for optimizing the in-line production of solar cells as claimed in one of claims 10 to 14, **characterized in that** data patterns which indicate signs of wear and/or maintenance requirement of process devices (PE1, PE2, PEn) are determined from the correlation results (201) generated.

## Revendications

1. Un système d'essai de cellules solaires optoélectroniques pour une installation de production de cellules solaires en ligne, le système d'essai de cellules solaires comprenant :
- un dispositif d'exposition et de mesure (10) pour la mesure en ligne de cellules solaires et-
- un dispositif de contrôle et d'évaluation (20) couplé avec le dispositif d'exposition et de mesure (10),
dans lequel le dispositif d'exposition et de mesure (10) est conçu et configuré pour effectuer une ou plusieurs mesures d'essai (TM) sur une cellule solaire (SC) pour générer de données de mesure d'essai,
dans lequel les mesures d'essai (TM) sont choisies dans le groupe contenant :
- une mesure d'enregistrement infrarouge d'une cellule solaire alimentée en courant dans le sens inverse pour déterminer les courts-circuits locaux dans la cellule solaire,
- une exposition flash avec un spectre d'exposition pour la mesure d'au moins une caractéristique courant-tension de la cellule solaire,
- une pluralité d'expositions flash spectralement différenciées pour la mesure de caractéristiques de courant à résolution spectrale de la cellule solaire et/ou pour la mesure d'un rendement quantique quasi-externe de la cellule solaire,
- une mesure par électroluminescence de la cellule solaire, en particulier pour la détection de microfissures dans le matériau de la cellule solaire et/ou pour la détection d'interruptions de structure d'électrode et/ou de problèmes de contact entre les structures d'électrode et le substrat et/ou pour la détermination de zones électriquement inactifs et/ou circuits courts locaux,
- une mesure de la courbe caractéristique d'éclairement et une mesure de la courbe caractéristique d'obscurité de la cellule solaire pour calculer la résistance série de la cellule solaire
- une mesure de résistance des structures d'électrodes comprenant des doigts d'électrode pour déterminer la qualité des structures d'électrodes métalliques,
caractérisé en que le dispositif de contrôle et d'évaluation (20) est conçu et configuré pour effectuer des analyses statistiques (200) avec des données de mesure d'essai des mêmes mesures d'essai (TM) procédées au moyen du dispositif d'exposition et de mesure (10) sur un grand nombre de cellules solaires (SC) produites en ligne, et
- corréler entre elles les analyses statistiques (200) des données de mesure d'essai de différentes mesures d'essai (TM), et/ou
- corréler les analyses statistiques des données de mesure d'essai (TMstat) avec des analyses statistiques des données de mesure de production (PMstat), et/ou
- corréler les analyses statistiques des données de mesure d'essai (TMstat) et/ou les analyses statistiques des données de mesure de production (PMstat) avec des données d'entrée de production (PED) afin de générer des résultats de corrélation (201) et à partir des résultats de corrélation (201) d'élaborer sur la base des règles de dérivation (202) au moins une proposition d'action (203) et/ou au moins une instruction d'action (204), qui sont assignées à au moins un groupe de personnes (PG1,PG2,PGn) participant à la production en ligne de cellules solaires, dans lequel le dispositif de contrôle et d'évaluation (20) comprend un dispositif de communication (21) qui transmet au moins une proposition d'action (203) et/ou au moins une instruction d'action (204) à au moins un groupe de personnes (PG1,PG2,PGn) assigné.

2. Le système d'essai de cellules solaires optoélectroniques selon la revendication 1, **caractérisé en ce que** le dispositif de communication (21) est conçu et configuré de telle sorte que
- un dispositif d'affichage (12) disposé sur le dispositif d'exposition et de mesure (10), et/ou
- un dispositif d'affichage (22) disposé sur le dispositif de contrôle et d'évaluation (20), et/ou
- un dispositif d'affichage (PD1,PD2,PDn) disposé sur un dispositif de traitement (PE1,PE2,PEn) de l'usine de production de cellules solaires en ligne et/ou
- un dispositif terminal numérique mobile (M1,M2,Mn) communique au moins une proposition d'action (203) et/ou au moins une instruction d'action (204) à au moins un groupe de personnes (PG1,PG2,PGn) assigné.

3. Le système d'essai de cellules solaires optoélectroniques selon la revendication 2, **caractérisé en ce que** le dispositif de communication (21) est conçu et configuré de telle sorte que le dispositif de communication (21) choisit au moins un groupe de personnes (PG1,PG2,PGn) spécifiquement assigné en fonction de l'au moins une proposition d'action (203) dérivée et/ou de l'au moins une instruction d'action (204) dérivée.

4. Le système d'essai de cellules solaires optoélectroniques selon l'une quelconque des revendications 2 ou 3, **caractérisé en ce que** le dispositif de contrôle et d'évaluation (20) est conçu et configuré
- pour effectuer les analyses statistiques des données de mesure de production (PMstat) au moyen des valeurs mesurées de production (PM) reçues à partir de dispositifs de mesure de production (PM1, PM2, PMn) et/ou
- pour recevoir des dispositifs de mesure de production (PM1, PM2, PMn) les analyses statistiques des données de mesure de la production (PMstat) générées dans les dispositifs de mesure de production (PM1, PM2, PMn).

5. Le système d'essai de cellules solaires optoélectroniques selon l'une des revendications 2 à 4, **caractérisé en ce que** les commandes de dérivation (202) sont stockées dans une mémoire numérique (23) du dispositif de contrôle et d'évaluation (20).

6. Le système d'essai de cellules solaires optoélectroniques selon la revendication 5, **caractérisé en ce que** les règles de dérivation (202) sont stockées de manière modifiable dans la mémoire numérique (23) du dispositif de contrôle et d'évaluation (20) via une interface numérique (24).

7. Le système d'essai de cellules solaires optoélectroniques selon l'une quelconque des revendications 2 à 6, **caractérisé en ce que** le dispositif d'affichage (12) du dispositif d'exposition et de mesure (10) et/ou le dispositif d'affichage (22) du dispositif de contrôle et d'évaluation (20) et/ou le dispositif d'affichage (P1,PD2,PDn) du dispositif de traitement (PE1,PE2,PEn) et/ou les dispositifs terminaux mobiles et numériques (M1, M2, Mn) sont conçus et configurés pour accueillir un signal de réception d'acquit (EQ1, EQ2, EQn) généré par au moins un groupe de personnes (PG1, PG2, PGn) spécifiquement assigné.

8. Le système d'essai de cellules solaires optoélectroniques selon l'une quelconque des revendications 2 à 7, **caractérisé en ce que** le dispositif d'affichage (12) du dispositif d'exposition et de mesure (10) et/ou le dispositif d'affichage (22) du dispositif de contrôle et d'évaluation (20) et/ou le dispositif d'affichage (PD1,PD2,PDn) du dispositif de traitement (PE1,PE2,PEn) et/ou au moins un des dispositifs terminaux numériques et mobiles (M1,M2,Mn) sont conçus et configurés pour recevoir un signal d'évaluation (F1,F2,Fn), dans lequel le signal d'évaluation (F1,F2,Fn) communique par au moins un groupe de personnes (PG1,PG2,PGn) assigné, si la proposition d'action (203) générée par le dispositif de contrôle et d'évaluation (20) et/ou l'instruction d'action (204) générée par le dispositif de contrôle et d'évaluation (20) était correcte du point de vue du groupe de personnes (PG1,PG2,PGn) assigné.

9. Le système d'essai de cellules solaires optoélectroniques selon la revendication 8, **caractérisé en ce que** le dispositif de contrôle et d'évaluation (20) est conçu et configuré pour effectuer une analyse statistique entre les propositions d'action (203) générées et les instructions d'action (204) générées et les signaux d'évaluation (F 1,F2,Fn) obtenus en réponse à celles-ci et pour vérifier et adapter les règles de dérivation (202) en fonction de ces analyses statistiques.

10. Un procédé d'optimisation de la production de cellules solaires au moyen d'une installation de production de cellules solaires en ligne utilisant un système d'essai de cellules solaires optoélectroniques selon l'une des revendications précédentes, dans lequel l'installation de production de cellules solaires en ligne est construit d'une pluralité de dispositifs de traitement (PE 1,PE2,PEn) avec des dispositifs de mesure de procédé (PM1,PM2,PMn) pour générer des données de mesures de production (PM).

11. Le procédé d'optimisation de la production en ligne de cellules solaires selon la revendication 10, **caractérisé en ce que**
- les analyses statistiques des données de mesure d'essai (TMstat) de différentes mesures d'essai sont corrélées entre elles, et/ou
- les analyses statistiques des données de mesure d'essai (TMstat) des mesures d'essai sont corrélées avec les analyses statistiques des données de mesure de production (PMstat) de mesures de production, et/ou
- les analyses statistiques des données de mesure d'essai (TMstat) sont corrélées avec les données d'entrée de production (PED), et/ou
- les analyses statistiques des données de mesure de la production (PMstat) sont corrélées avec les données d'entrée de production (PED) afin de générer des résultats de corrélation (201) et de dériver à partir des résultats de corrélation (201) sur la base de règles de dérivation (202) au moins une proposition d'action (203) et/ou au moins une instruction d'action (204), qui sont assignées à au moins un groupe de personnes (PG1,PG2,PGn) impliquées dans la production en ligne des cellules solaires, et au moins une proposition d'action (203) et/ou au moins une instruction d'action (204) est transmise à au moins un groupe de personnes (PG1,PG2,PGn) assigné.

12. Le procédé d'optimisation de la production en ligne de cellules solaires selon la revendication 11, **caractérisé en ce que** les règles de dérivation (202) du système d'essai de cellules solaires optoélectroniques sont vérifiées et adaptées par un système de rétroaction dans le but de produire des cellules solaires avec une qualité optimisée, dans lequel le système de rétroaction (205) est fourni avec des informations de rétroaction (F1,F2,Fn) par au moins un groupe de personnes (PG1,PG2,PGn) impliquées dans la production en ligne des cellules solaires.

13. Le procédé d'optimisation de la production en ligne de cellules solaires selon la revendication 12, **caractérisée** en que les règles de dérivation (202) sont vérifiées et adaptées par un programme d'optimisation automatisé.

14. Le procédé d'optimisation de la production en ligne de cellules solaires selon l'une quelconque des revendications 10 à 13, **caractérisé en ce que** des propositions d'action (203) et/ou des instructions d'action (204), auxquelles le groupe de personnes (PG1,PG2,PGn) assigné ne réagit pas après l'expiration d'un délai d'acquit sont communiquées avec une plus grande perceptibilité ou un niveau de pertinence plus élevé et/ou sont communiquées à d'autres groupes de personnes (PG1,PG2,PGn).

15. Le procédé d'optimisation de la production en ligne de cellules solaires selon l'une des revendications 10 à 14, **caractérisée** en que les modèles de données sont déterminés à partir des résultats de corrélation (201) générés, qui indiquent des signes d'usure et/ou un besoin de maintenance des dispositifs de traitement (PE1,PE2,PEn).
